Europäisches Patentamt

European Patent Office

Office européen des brevets

(11) Numéro de publication : **0 442 828 A1**

(12) **DEMANDE DE BREVET EUROPEEN**

(21) Numéro de dépôt : **91420041.5**

(22) Date de dépôt : **06.02.91**

(51) Int. Cl.$^5$ : **H01H 3/02, B60M 1/18**

(30) Priorité : **13.02.90 FR 9001935**

(43) Date de publication de la demande :
**21.08.91 Bulletin 91/34**

(84) Etats contractants désignés :
**DK GB SE**

(71) Demandeur : **SOCIETE DAUPHINOISE DE CONSTRUCTIONS ELECTRO MECANIQUES**
**La Grange**
**F-38450 Vif (FR)**

(72) Inventeur : **Chalvin, André**
**8, Avenue du Général Roux**
**38 Pont de Claix (FR)**

(74) Mandataire : **Wind, Jacques**
**CABINET JACQUES WIND 4, Quai des Etroits**
**F-69005 Lyons (FR)**

(54) **Dispositif de manoeuvre à distance d'un sectionneur, ou autre commutateur électrique, placé dans un tunnel.**

(57) Dispositif de manoeuvre à distance d'un sectionneur (3), ou analogue, placé au sommet d'un tunnel ferroviaire à section circulaire.

La transmission du mouvement à partir du poste de commande (4) placé sur le côté du tunnel et sensiblement au niveau des rails s'effectue, dans l'espace restreint (5) laissé par le gabarit ferroviaire (1), à l'aide d'une tige (9) en arc de cercle à même rayon de courbure que le tunnel.

EP 0 442 828 A1

Jouve, 18, rue Saint-Denis, 75001 PARIS

Fig.1

# DISPOSITIF DE MANOEUVRE A DISTANCE D'UN SECTIONNEUR, OU AUTRE COMMUTATEUR ELECTRIQUE, PLACE DANS UN TUNNEL

La présente invention se rapporte à un dispositif de manoeuvre à distance d'un sectionneur, ou autre commutateur électrique, placé en hauteur et sur la paroi interne d'un tunnel à section circulaire, c'est à dire d'un tunnel à section en forme de cercle ou de portion de cercle, et en particulier d'un tunnel ferroviaire de ce type.

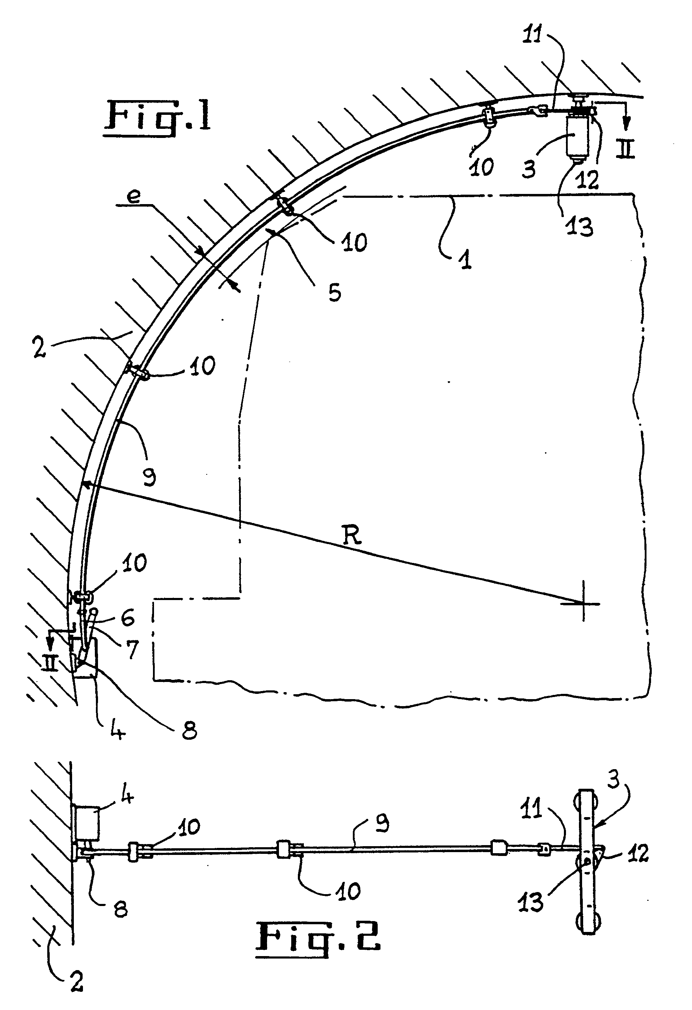

La figure 1 jointe montre, en coupe partielle, une portion de tunnel ferroviaire dont, tel que ce sera par exemple le cas pour le futur tunnel sous la manche, la section est rigoureusement circulaire. Il s'agit en l'espèce d'un tunnel dont le rayon R est de l'ordre de quatre mètres, et pour lequel le gabarit 1 du train arrive à une distance e de la paroi interne 2 qui est de l'ordre d'une vingtaine de centimètres seulement.

Comme tous les réseaux ferroviaires électrifiés, celui-ci est équipé de sectionneurs 3 qui sont disposés en haut, c'est à dire au sommet de la paroi interne circulaire 2.

Le boîtier de commande 4 de chacun de ces sectionneurs 3, qui doit être directement accessible aux opérateurs, est alors nécessairement situé en bas et sur le côté du tunnel, comme représenté figure 1, de sorte qu'il se pose le problème de la transmission mécanique du mouvement d'ouverture et de fermeture du sectionneur 3 entre ce boîtier 4 placé en bas et sur le côté du tunnel, et ce sectionneur 3 qui se trouve placé au sommet de ce dernier. Il convient à ce sujet de rappeler que, conformément aux normes de sécurité, une commande manuelle doit obligatoirement être prévue au niveau du boîtier 4, afin de pouvoir de toute façon actionner le sectionneur 3 en cas de panne d'électricité. Ceci implique bien entendu que la liaison de transmission de mouvement entre le boîtier 4 et le sectionneur 3 soit d'ordre mécanique, et ne soit pas par exemple une liaison par ondes électromagnétiques.

De multiples solutions, empruntées à l'état de la technique, peuvent être envisagées dans ce but :
Une première solution venant immédiatement à l'esprit est d'utiliser, pour réaliser une transmission mécanique en arc de cercle longeant la paroi 2 sans sortir de l'espace 5 de largeur e, une série de courtes tringles articulées l'une sur l'autre, les articulations étant elles-mêmes chacune fixées à la paroi 2 par l'intermédiaire d'une biellette articulée. Il s'agit d'une solution classiquement utilisée pour la commande des sectionneurs mais qui en l'espèce nécessiterait un grand nombre de courtes tringles, six à huit par exemple, ce qui imposerait un grand nombre de paliers et un nombre de réglage importants : cette solution serait donc exagérément complexe et onéreuse.

On pourrait aussi envisager une télétransmission hydraulique ou pneumatique utilisant, en cas de panne d'électricité, une petite pompe hydraulique ou pneumatique actionnable à la main. Ceci aurait pour inconvénients d'une part de nécessiter une pompe uniquement prévue dans ce but, et d'autre part de présenter un risque de gros ennuis en cas de fuite, en particulier en cas de fuite dans la partie haute du tunnel qui, par hypothèse, est considéré comme pratiquement inaccessible aux opérateurs. En outre, ce genre de transmission a pour inconvénient, surtout dans le cas du pneumatique, de présenter une certaine inertie de fonctionnement qui est due au caractère compressible du fluide transmetteur d'énergie.

Une autre idée serait d'envisager une transmission par câble fonctionnant en traction, avec un brin aller et un brin retour à l'instar des systèmes utilisés pour les téléskis. Il faudrait alors prévoir des dispositifs de tension appropriés ainsi que tout un jeu de poulies de guidage pour le brin aller d'une part et pour le brin retour d'autre part, ce qui serait finalement assez onéreux. En outre, on courrait toujours le risque de voir ce câble sortir accidentellement d'une de ces poulies de guidage.

Une dernière solution empruntée à l'art connu serait d'utiliser une transmission en torsion engendrée par la rotation axiale d'une tige ou d'un câble souples ou semi-rigides, à l'instar des dispositifs par exemple utilisés pour les perceuses. Un tel dispositif serait en fait soit extrêmement onéreux dans le cas d'une tige semirigide tournant classiquement dans des chemins de billes, soit difficile à mettre en oeuvre dans le cas du câble rotatif, car, compte tenu de la distance de transmission particulièrement importante dont il s'agit, il faudrait effectuer en bas un grand nombre de tours pour espérer obtenir une rotation d'un quart de tour du sectionneur se trouvant en haut du tunnel.

L'invention a pour objet de proposer une solution nouvelle et ne présentant pas tous ces inconvénients. Elle se rapporte à cet effet à un dispositif de manoeuvre à distance d'un sectionneur, ou autre commutateur électrique, placé en hauteur et sur la paroi interne d'un tunnel à section circulaire, cette manoeuvre se faisant à partir d'un poste de commande placé, dans une même section que le sectionneur, en bas et sur le coté du tunnel, et seul un espace restreint, longeant la paroi, étant disponible pour assurer une transmission mécanique de mouvement entre ce poste de commande et ce sectionneur, ce dispositif utilisant, pour réaliser cette transmission de mouvement, une tige rigide en arc de cercle sensiblement de même rayon de courbure que le tunnel, assurant la majeure partie de la liaison entre le poste de commande et le sectionneur et apte à se déplacer dans cet espace restreint dans un sens comme dans l'autre le long de la circonférence de cette section du tunnel sur une distance angulaire suffisante pour entraîner, par un dispositif classique, du genre bielle-manivelle par exemple, associé au sectionneur, l'ouverture ou la fermeture de ce sectionneur.

De toute façon, l'invention sera bien comprise, et ses avantages et autres caractéristiques ressortiront, lors de la description suivante d'un exemple non limitatif de réalisation, en référence au dessin schématique annexé dans lequel :

- Figure 1, déjà évoquée ci-dessus, est une vue d'ensemble de ce dispositif de manoeuvre à distance ;

- Figure 2 en est une vue coupe selon II-II de Figure 1 ;

- Figure 3 est une vue agrandie montrant l'actionnement de ce dispositif à partir de son poste de commande ; et

- Figure 4 est de même une vue agrandie montrant l'opération l'actionnement du sectionneur qui est obtenue avec ce dispositif.

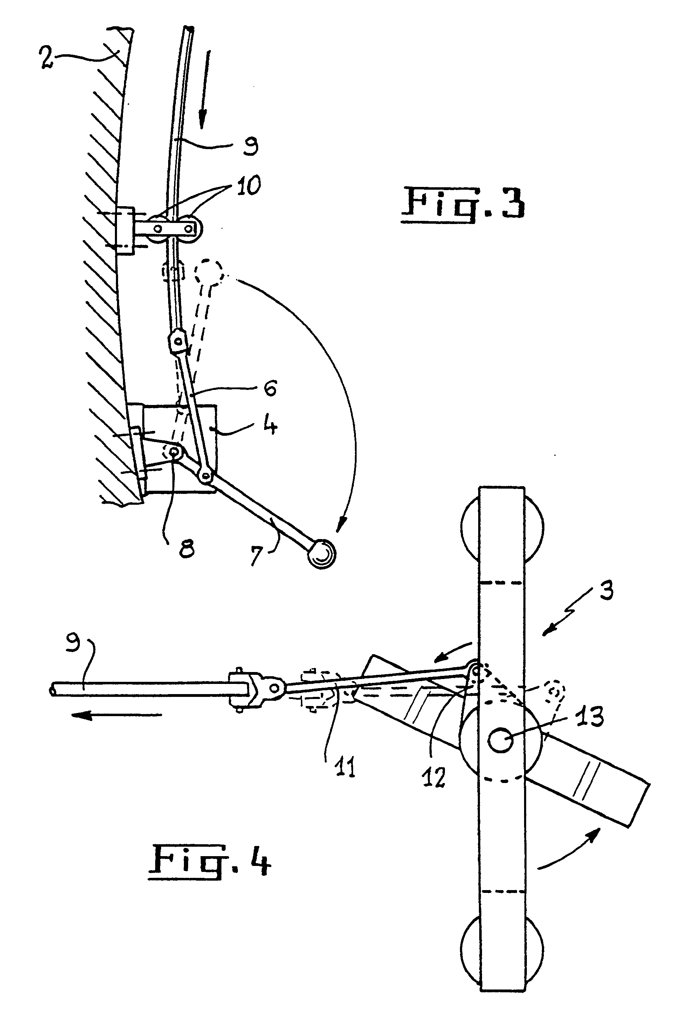

En se reportant tout d'abord à l'ensemble des figures 1 et 2, il s'agit donc d'un dispositif apte à actionner le sectionneur 3 situé au sommet de ce tunnel ferroviaire à section circulaire (c'est à dire à section en cercle ou portion de cercle), à partir d'un poste de commande 4 situé sur le côté et sensiblement au niveau des rails, mais toutefois, et c'est un point essentiel, dans la même section transversale que le sectionneur 3.

Conformément à l'invention, la transmission de mouvement entre 4 et 3 s'effectue, dans l'espace restreint 5 de largeur e laissé libre par le gabarit ferroviaire 1, par :

- une biellette 6 qui, en combinaison avec une manivelle 7, transforme en mouvement de translation sensiblement verticale le mouvement de rotation imprimé à un axe 8 du boîtier 4 soit par cette manivelle 7, soit par un groupe électrique motoréducteur contenu dans le boîtier de commande 4 ;

- une tige rigide 9 en arc de cercle sensiblement de même rayon de courbure que le tunnel, qui est guidée le long de la paroi 2 par des galets de soutien 10 et qui a, dans ce cas de figure, une longueur sensiblement égale à un quart de cercle, très peu inférieure à celle séparant, le long de la paroi 2, le boîtier 4 du sectionneur 3 ; et

- une biellette à rotule 11 apte, en combinaison avec une manivelle 12 équipant le sectionneur 3, à transformer le mouvement de translation sensiblement verticale qui lui est imprimé par la tige 9 en mouvement de rotation de l'axe 13 du sectionneur 3.

Sur la figure 3 est bien illustré le mouvement du haut en bas de la manivelle 7 qui, par voie de conséquence, fait tourner l'axe 8 tout en tirant, par la biellette 6, l'extrémité inférieure de la tige 9 vers le bas.

De même, la figure 4 montre comment ce mouvement de traction se traduit pour un déplacement vers la gauche de l'extrémité supérieure de la tige en quart de cercle 9, ce qui entraîne, par rotation de l'axe 13, l'ouverture du sectionneur 3.

Comme il va de soi, l'invention n'est pas limitée à l'exemple de réalisation qui vient d'être décrit, mais elle est au contraire réalisable sous bien d'autres formes équivalentes. C'est ainsi par exemple que l'organe électrique à actionner pourrait ne pas être un sectionneur, mais par exemple un disjoncteur, un interrupteur apte - à contrario d'un sectionneur - à être actionné en charge, un commutateur deux voies ou plus, etc...

## Revendications

1 - Dispositif de manoeuvre à distance d'un sectionneur (3), ou autre commutateur électrique, placé en hauteur et sur la paroi interne (2) d'un tunnel à section circulaire, par exemple d'un tunnel ferroviaire de ce type, caractérisé en ce que, cette manoeuvre se faisant à partir d'un poste de commande (4) placé, dans une même section du tunnel que ce sectionneur (3), en bas et sur le côté de ce tunnel, et seul un espace restreint (5) longeant la paroi (2) restant disponible pour assurer une transmission mécanique de mouvement entre ce poste de commande (4) et ce sectionneur (3), ce dispositif utilise, pour réaliser cette transmission de mouvement, une tige rigide (9) en arc de cercle sensiblement de même rayon de courbure que le tunnel, assurant la majeure partie de la liaison entre le poste de commande (4) et le sectionneur (3), et apte à se déplacer dans cet espace restreint (5) dans un sens comme dans l'autre le long de la circonférence de cette section du tunnel sur une distance angulaire suffisante pour entraîner, par un dispositif classique (11, 12), du genre bielle-manivelle par exemple, associé au sectionneur (3), l'ouverture ou la fermeture de ce sectionneur.

2 - Dispositif selon la revendication 1, caractérisé en ce que ladite transmission mécanique de mouvement comporte successivement :

- une biellette (6) qui, en combinaison avec une manivelle (7), transforme en mouvement de translation le mouvement de rotation imprimé à un axe (8) du poste de commande (4) ;

- cette tige rigide en arc de cercle (9) ; et

- une biellette à rotule (11) apte à transmettre au sectionneur (3) un mouvement apte à entraîner son ouverture ou sa fermeture.

Fig.1

Fig.2

2

9

10

Fig.3

6

4

8    7

9

3

11    12    13

Fig.4

6

Office européen des brevets

## RAPPORT DE RECHERCHE EUROPEENNE

Numero de la demande

EP    91 42 0041

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-C-397538 (VEREINIGTE ISOLATORENWERKE AG)<br>* le document en entier *<br>--- | | H01H3/02<br>B60M1/18 |
| A | US-A-3647996 (J. BERNATT ET AL.)<br>* colonne 3, lignes 18 - 42; figures 1, 4 *<br>--- | | |
| P,A | EP-A-403374 (SPIE-BATIGNOLLES)<br>* colonne 5, lignes 2 - 39; revendication 1; figures 1-3, 6, 7 *<br>------ | 1 | |

| DOMAINES TECHNIQUES RECHERCHES (Int. Cl.5) |
|---|
| H01H<br>B60M |

Le présent rapport a été établi pour toutes les revendications

| Lieu de la recherche | Date d'achèvement de la recherche | Examinateur |
|---|---|---|
| BERLIN | 27 MAI 1991 | RUPPERT, W |